# FASCICULE DE BREVET EUROPEEN

(11) **EP 3 221 625 B1**
(45) Date de publication et mention de la délivrance du brevet: **29.06.2022**
(21) Numéro de dépôt: 15801718.6
(22) Date de dépôt: 19.11.2015
(51) Int. Cl.: F16L 11/08, F16L 11/20, F16L 33/01

(54) **PROCÉDÉ DE MISE EN PLACE D'UNE LIGNE FLEXIBLE COMPORTANT UNE GAINE EXTERNE DÉLIMITANT UN VOLUME INTÉRIEUR**
VERFAHREN ZUM INSTALLIEREN EINER FLEXIBLEN LEITUNG MIT EINER AUSSENHÜLLE ZUR ABGRENZUNG EINES INNENRAUMS
METHOD FOR INSTALLING A FLEXIBLE LINE COMPRISING AN EXTERNAL SHEATH DELIMITING AN INTERNAL VOLUME

(30) Priorité: 20.11.2014 FR 1461248
(43) Date de publication de la demande: 27.09.2017
(73) Titulaire: TECHNIP N-POWER, 92400 Courbevoie (FR)
(72) Inventeur: MORAND, Henri, 22081-025 Rio De Janeiro (BR); LAAF, Fred, 24220-260 Rio De Janeiro (BR); RIVET, Romain, 76000 Rouen (FR); FERRAZ, Jean-Paul, 22290-290 Rio De Janeiro (BR)
(74) Mandataire: Lavoix
(86) Numéro de dépôt international: PCT/EP2015/077137
(87) Numéro de publication internationale: WO 2016/079253

(56) Documents cités:
- EP-A2- 2 084 444
- WO-A1-00/11387
- WO-A1-00/17479
- WO-A2-2013/005000
- FR-A- 721 430
- FR-A1- 2 326 229
- US-A- 4 778 306
- US-A1- 2013 340 877

## Description

La présente invention concerne un procédé de mise en place d'une ligne flexible comportant une gaine externe délimitant un volume intérieur selon le préambule de la revendication 1.

La ligne flexible est notamment une conduite flexible telle que décrite dans les documents normatifs publiés par l'American Petroleum Institute (API), API 17J « Specification for Unbonded Flexible Pipe », et API RP17B « Recommended Practice for Flexible Pipe ». La conduite flexible est avantageusement de type non liée (« unbonded » en anglais).

En variante, la conduite flexible est un faisceau composite de type « integrated production bundle », comprenant au moins un tube de transport de fluide et un ensemble de câbles électriques ou optiques propres à transporter une puissance électrique ou hydraulique ou une information entre le fond et la surface de l'étendue d'eau.

Plus généralement, la ligne flexible est un ombilical, tel que décrit dans les documents normatifs publiés par l'American Petroleum Institute (API), API17E « Specification for Subsea Umbilicals ».

Les conduites flexibles comportent généralement une gaine externe de protection définissant un volume intérieur et au moins une gaine imperméable disposée à l'intérieur du volume intérieur.

Cette gaine imperméable est par exemple une gaine de pression délimitant un passage de circulation de fluide ou une gaine intermédiaire disposée entre la gaine de pression et la gaine externe.

Des couches d'armures de traction formées par des nappes de fils généralement métalliques sont disposées dans l'espace annulaire entre la gaine imperméable et la gaine externe, pour assurer une bonne résistance à la traction.

Dans certains cas, la longueur de la conduite augmente significativement, notamment pour les conduites adaptées pour les grandes profondeurs. Cette longueur est par exemple de l'ordre de 2000 m, voire plus.

Dans ce cas, la grande longueur de conduite suspendue engendre une grande tension sur les armures de traction. Les armures étant tendues axialement, elles produisent une pression de contact radial élevée sur la gaine imperméable ainsi que les couches sous-jacentes qu'elles entourent. Par ailleurs, la pression hydrostatique externe à la conduite étant élevée aux grandes profondeurs, par exemple de l'ordre de 250 barg la pression de contact radial engendrée par les armures de traction sur la gaine imperméable augmente encore.

Si elle n'est pas limitée, cette pression de contact radial est susceptible d'engendrer un fluage de la gaine imperméable à l'interface avec les couches d'armures de traction pouvant conduire à une augmentation de la raideur en flexion de la conduite, mais également de diminuer la résistance à la fatigue des armures, ce qui peut, dans certains cas critiques, réduire significativement la durée de vie de la conduite.

Pour pallier ce problème, il est connu d'augmenter l'épaisseur de la gaine imperméable. Cette solution n'est pas satisfaisante, puisqu'elle augmente le poids de la conduite et son coût.

WO2013005000 décrit une conduite flexible dans laquelle les gaz de l'annulaire sont évacués vers l'extérieur à travers une valve anti-retour. WO0017479 décrit par ailleurs une conduite flexible dans laquelle les gaz de l'annulaire sont évacués vers un conduit central de la ligne flexible à travers une valve anti-retour combinée dans un mode réalisation particulier avec une pompe.

Un but de l'invention est de fournir un procédé de mise en place d'une ligne flexible qui assure une durée de service adéquate pour la ligne flexible, même aux grandes profondeurs.

À cet effet, l'invention a pour objet un procédé selon la revendication 1.

Le procédé selon l'invention peut comprendre l'une ou plusieurs des caractéristiques des revendications 2 à 6 ou la caractéristique suivante, prise(s) isolément ou suivant toute combinaison techniquement possible :
- l'étape d'inondation est mise en œuvre lorsque la différence de pression entre l'extérieur de la gaine externe et le volume intérieur est supérieure à une valeur seuil donnée non nulle.

L'invention sera mieux comprise à la lecture de la description qui va suivre, donnée uniquement à titre d'exemple, et faite en se référant aux dessins annexés, sur lesquels :
- la figure 1 est une vue en perspective partiellement écorchée d'une première conduite flexible selon l'invention ;
- la figure 2 est une vue prise en coupe suivant un plan axial médian des parties pertinentes de l'embout de la conduite de la figure 1, délimitant un orifice d'introduction de liquide muni d'un organe anti-retour dans une configuration d'ouverture ;
- la figure 3 est une vue prise en coupe de l'organe anti-retour dans une configuration de fermeture ;
- la figure 4 est une vue analogue à la figure 2, après inondation partielle du volume intérieur, l'organe anti-retour étant dans sa configuration de fermeture ;
- la figure 5 est une vue analogue à la figure 2 de l'embout d'une deuxième conduite flexible selon l'invention ;- la figure 6 est une vue analogue à la figure 1 d'une troisième conduite flexible selon l'invention ;
- la figure 7 est une vue analogue à la figure 1 d'une quatrième conduite flexible selon l'invention.
- la figure 8 est une vue analogue à la figure 1 d'une variante de conduite flexible selon l'invention.

Dans tout ce qui suit, les termes « extérieur » ou « extérieurement » et « intérieur » ou « intérieurement » s'entendent généralement de manière radiale par rapport à un axe A-A' de la conduite, le terme « extérieur » s'entendant comme relativement plus éloigné radialement de l'axe A-A' et le terme « intérieur » s'entendant comme relativement plus proche radialement de l'axe A-A' de la conduite.

Par ailleurs, les termes « amont » et « aval » s'entendent généralement par rapport au sens normal de circulation d'un fluide pétrolier au sein de la conduite.

Dans le cas particulier d'une conduite d'injection de fluide, le fluide est injecté depuis la partie haute vers la partie basse de la conduite. Les termes « amont » et « aval » doivent par conséquent être interprétés à l'inverse d'une conduite normale de production.

Les pressions mentionnées sont des pressions différentielles, sauf indication contraire.

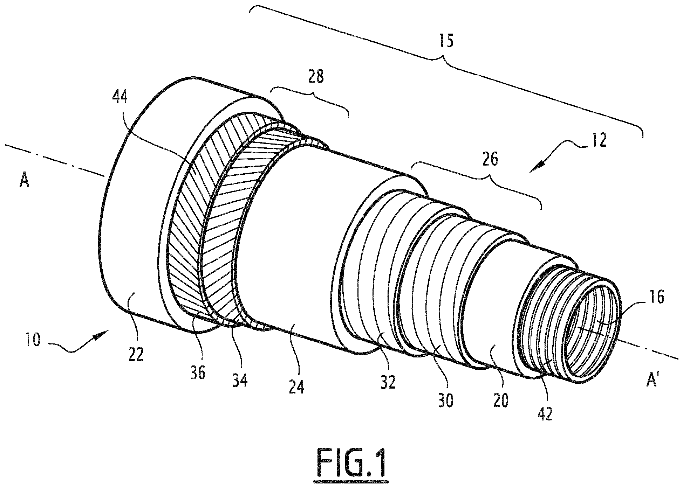

Une première ligne flexible selon l'invention, formée par une conduite flexible 10, est illustrée partiellement par les figures 1, 2, et 4.

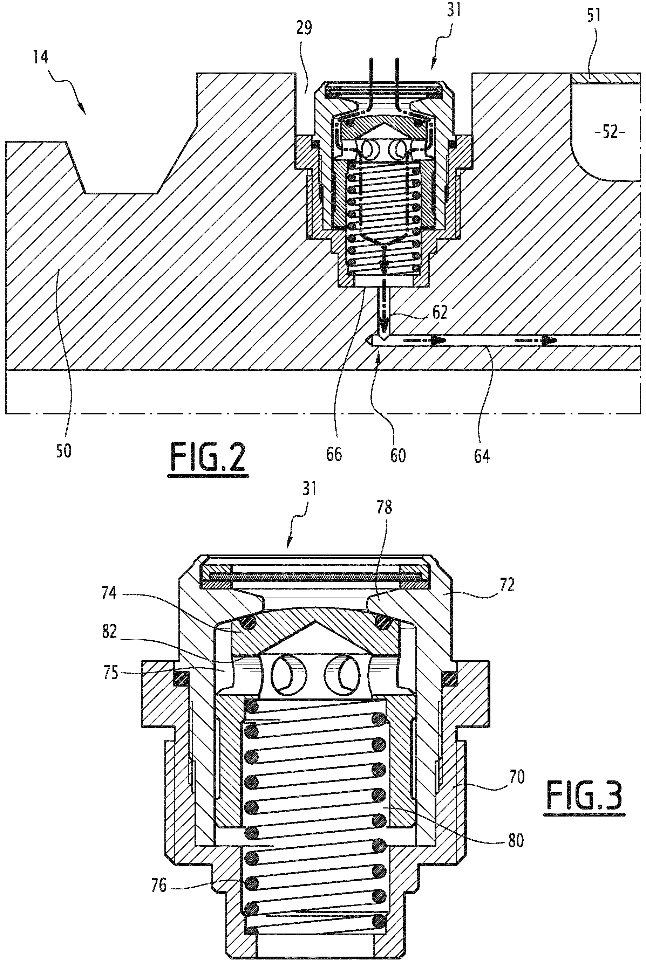

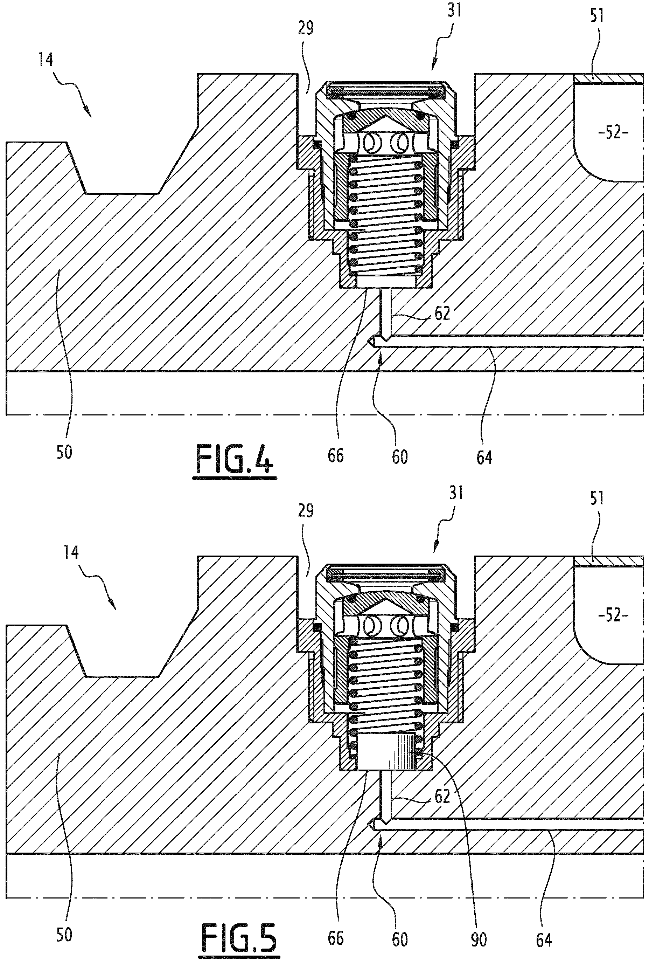

La conduite flexible 10 comporte un tronçon central 12 illustré en partie sur la figure 1. Elle comporte, à chacune des extrémités axiales du tronçon central 12, un embout d'extrémité 14, visible partiellement sur les figures 2 et 4.

En référence à la figure 1, la conduite 10 délimite, dans son volume intérieur 15, un passage central 16 de circulation d'un fluide, avantageusement d'un fluide pétrolier. Le passage central 16 s'étend suivant un axe A-A', qu'il contient, entre l'extrémité amont et l'extrémité aval de la conduite 10. Il débouche à travers les embouts 14.

Le diamètre du passage central 16 est avantageusement compris entre 50 mm (2") et 500 mm (20").

Le fluide convoyé par la conduite est par exemple un gaz ou un liquide extrait du sous-sol marin.

La conduite flexible 10 est destinée à être disposée à travers une étendue d'eau (non représentée) dans une installation d'exploitation de fluide, notamment d'hydrocarbures.

L'étendue d'eau est par exemple, une mer, un lac ou un océan. La profondeur de l'étendue d'eau au droit de l'installation d'exploitation de fluide est par exemple comprise entre 50 m et 4000 m.

L'installation d'exploitation de fluide comporte un ensemble de surface, généralement flottant, et un ensemble de fond (non représenté) qui sont généralement raccordés entre eux par la conduite flexible 10.

La conduite flexible 10 est dans cet exemple une conduite « non liée » (désignée par le terme anglais « unbonded »).

Au moins deux couches adjacentes de la conduite flexible 10 sont libres de se déplacer longitudinalement l'une par rapport à l'autre lors d'une flexion de la conduite.

Avantageusement, toutes les couches adjacentes de la conduite flexible sont libres de se déplacer l'une par rapport à l'autre. Une telle conduite est par exemple décrite dans les documents normatifs publiés par l'American Petroleum Institute (API), API 17J, et API RP17B.

Comme illustré par la figure 1, la conduite 10 délimite une pluralité de couches concentriques autour de l'axe A-A', qui s'étendent continûment le long du tronçon central 12 jusqu'aux embouts 14 situés aux extrémités de la conduite.

La conduite 10 comporte ici au moins une première gaine 20 à base de matériau polymère constituant une gaine de pression. La conduite 10 comprend une deuxième gaine externe 22, destinée à la protection de la conduite 10 et, dans l'exemple particulier représenté sur la figure 1, une gaine intermédiaire 24 étanche interposée entre la gaine interne 20 et la gaine externe 22.

La gaine intermédiaire 24 définit avec la gaine interne 20, un espace annulaire interne 26. Elle définit avec la gaine externe 22 un espace annulaire externe 28 de renfort de la gaine intermédiaire 24.

Selon l'invention, en référence à la figure 2, la conduite 10 définit au moins un orifice 29 d'introduction de liquide dans l'espace annulaire externe 28 et un organe anti-retour 31, propre à permettre l'introduction de liquide pour inonder au moins partiellement l'espace annulaire externe 28 dans une zone amont de la conduite 10 lors de la mise en place de la conduite 10, puis à se refermer, une fois l'espace annulaire externe 28 inondé.

Dans cet exemple, dans l'espace annulaire interne 26, la conduite 10 comporte une voûte de pression 30, et optionnellement, une frette interne 32 enroulée autour de la voûte de pression 30.

Dans l'espace annulaire externe 28, la conduite 10 comporte une pluralité de couches d'armures de traction 34, 36 internes disposées extérieurement autour de la gaine intermédiaire 24.

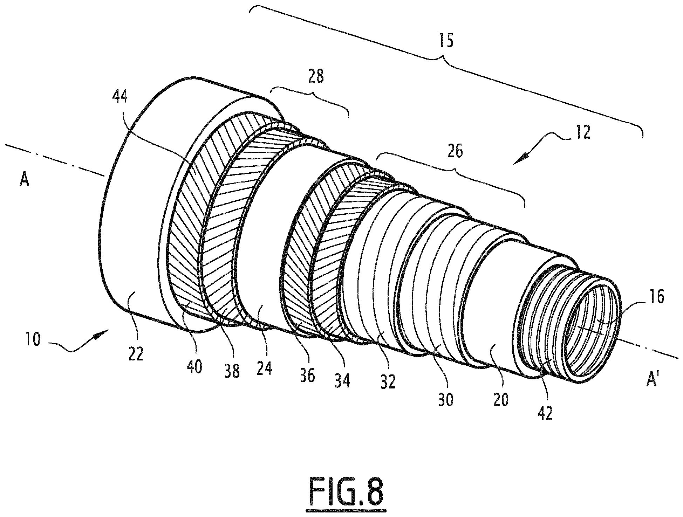

En variante représentée sur la figure 8, la conduite 10 comporte, dans l'espace annulaire interne 26, une pluralité de couches d'armures de traction 34, 36 internes disposées extérieurement par rapport à la voûte de pression 30 et par rapport à la frette 32 et dans l'espace annulaire externe, une pluralité de couches d'armures de traction externes 38, 40 externes disposées extérieurement autour de la gaine intermédiaire 24.

Selon une variante de réalisation de l'invention, les couches d'armures de traction 38, 40 sont remplacées par une voûte de pression formée à partir d'un fil profilé en métal présentant une géométrie en forme de T, de U, de K, de X ou de I.

Avantageusement, la conduite 10 comporte en outre une carcasse interne 42 disposée à l'intérieur de la gaine interne 20.

La carcasse 42, lorsqu'elle est présente, est formée par exemple d'un feuillard métallique profilé, enroulé en spirale. Les spires du feuillard sont avantageusement agrafées les unes aux autres, ce qui permet de reprendre les efforts radiaux d'écrasement.

L'enroulement hélicoïdal du feuillard métallique profilé formant la carcasse 42 est à pas court, c'est-à-dire qu'il présente un angle d'hélice de valeur absolue proche de 90°, typiquement compris entre 75° et 90°.

Dans cet exemple, la carcasse 42 est disposée à l'intérieur de la gaine interne 20. La conduite est alors désignée par le terme anglais « rough bore » en raison de la géométrie de la carcasse 42.

En variante (non représentée), la conduite flexible 10 est dépourvue de carcasse interne 42, elle est alors désignée par le terme anglais « smooth bore ».

De manière connue, la gaine interne 20 est destinée à confiner de manière étanche le fluide transporté dans le passage 16. Elle est formée en matériau polymère, par exemple à base d'une polyoléfine telle que du polyéthylène, à base d'un polyamide tel que du PA11 ou du PA12, ou à base d'un polymère fluoré tel que du polyfluorure de vinylidène (PVDF).

L'épaisseur de la gaine interne 20 est par exemple comprise entre 5 mm et 20 mm.

Dans cet exemple, la voûte de pression 30 est destinée à reprendre les efforts liés à la pression régnant à l'intérieur de la gaine interne 20. Elle est par exemple formée d'un fil profilé métallique entouré en hélice autour de la gaine 20. Le fil profilé présente de préférence une géométrie, notamment en forme de Z. La géométrie en Z permet d'améliorer la résistance mécanique générale de la conduite 10 et permet aussi de réduire sa masse.

En variante, le fil profilé présente une géométrie en forme de T, de U, de K, de X ou de I.

La voûte de pression 30 est enroulée en hélice à pas court autour de la gaine interne 20, c'est-à-dire avec un angle d'hélice de valeur absolue proche de 90°, typiquement compris entre 75° et 90°.

La frette 32, lorsqu'elle est présente, est constituée par un enroulement en spirale d'au moins un fil avantageusement de section transversale rectangulaire autour de la voûte de pression 30.

La superposition de plusieurs fils enroulés autour de la voûte de pression 30 peut avantageusement remplacer une épaisseur totale de frette 32 donnée. Ceci permet d'augmenter la résistance à l'éclatement de la conduite 10, mais également de diminuer le risque de fatigue par frottement. L'enroulement du au moins un fil est à pas court, c'est-à-dire avec un angle d'hélice de valeur absolue proche de 90°, typiquement compris entre 75° et 90°.

Dans une variante de réalisation de l'invention, la voûte de pression 30 et la frette 32 sont remplacées par une voûte de pression d'épaisseur plus importante formée à partir d'un fil profilé en métal présentant une géométrie en forme de T, de U, de K, de X ou de I, et/ou à partir d'au moins une bande en aramide à résistance mécanique élevée (Technora^{®} ou Kevlar^{®}), et/ou à partir d'au moins une bande composite comprenant une matrice thermoplastique dans laquelle sont noyées des fibres de carbone ou des fibres de verre.

Dans une autre variante de réalisation de l'invention, la conduite flexible ne comporte pas de voûte de pression. Une telle structure de conduite flexible est dite « équilibrée » (non représentée).

La conduite comprend au moins une paire de couches d'armures croisées de résistance à la traction disposée au-dessus de la gaine interne. Les armures comportent chacune des fils métalliques enroulés à pas long, en sens opposés, autour de la gaine interne selon un angle d'hélice de valeur absolue compris entre 50° et 60°, préférentiellement 55° par rapport à l'axe longitudinal de la conduite. Cela signifie que les fils de la première couche d'armures sont enroulés à pas long, selon un angle d'hélice compris entre +50° et +60° et les fils de la seconde couche d'armures sont enroulés à pas long, selon un angle d'armage compris entre -50° et -60°.

Dans l'exemple représenté sur la figure 1, la conduite flexible 10 comporte au moins une paire de couches d'armures internes 34, 36.

En variante, la conduite flexible 10 comporte plusieurs paires de couches d'armures internes 34, 36 superposées les unes sur les autres, par exemple deux paires de couches d'armures internes 34, 36.

Chaque paire comporte une première couche d'armures internes 34 appliquée sur la gaine intermédiaire 24 ou sur une autre paire de couches d'armures internes, et une deuxième couche d'armures internes 36, disposée autour de la première couche d'armures internes 34.

Chaque couche d'armures internes 34, 36 comporte au moins un élément d'armure 44 longitudinal enroulé à pas long autour de l'axe A-A' de la conduite 10.

Par « enroulé à pas long », on entend que la valeur absolue de l'angle d'hélice est inférieure à 60°, et est typiquement comprise entre 20° et 60°.

Dans l'exemple représenté sur la figure 1, la valeur absolue de l'angle d'hélice de chaque couche d'armures internes 34, 36 est inférieure à 45°, et est notamment comprise entre 20° et 30°, et est environ égale à 25°.

Les éléments d'armure 44 d'une première couche 34 sont enroulés généralement suivant un angle opposé par rapport aux éléments d'armure 44 d'une deuxième couche 36. Ainsi, si l'angle d'enroulement des éléments d'armure 44 de la première couche 34 est égal à + α, α étant compris entre 20° et 60°, l'angle d'enroulement des éléments d'armure 44 de la deuxième couche 36 disposée au contact de la première couche 34 est par exemple de - a, avec α compris entre 20° et 60°.

Les éléments d'armure 44 sont par exemple formés par des fils métalliques ou en matériau composite, ou par des rubans à résistance mécanique élevée.

Dans cet exemple, chaque couche d'armures 34, 36 repose sur au moins une bande anti-usure. La bande anti-usure est par exemple réalisée en plastique, notamment à base d'un polyamide ou d'un polyfluorure de vinylidène (PVDF). Elle présente une épaisseur inférieure à l'épaisseur de chaque gaine 20, 22, 24.

Avantageusement, un ruban de maintien telle qu'une bande en aramide à résistance mécanique élevée (Technora^{®} ou Kevlar^{®}) est enroulé autour de la deuxième couche d'armures externes 36 la plus à l'extérieur par rapport à l'axe A-A', pour assurer un maintien mécanique des couches d'armures externes 34, 36.

La gaine intermédiaire 24 est destinée à confiner l'espace annulaire interne 26. Ainsi, l'espace annulaire externe 28 destiné à être inondé est séparé de manière étanche de l'espace annulaire interne 26 destiné à rester sec.

La gaine intermédiaire 24 est avantageusement réalisée en matériau polymère, notamment à base d'une polyoléfine, tel que du polyéthylène, à base d'un polyamide, tel que du PA11 ou du PA12, ou à base d'un polymère fluoré tel que du polyfluorure de vinylidène (PVDF).

L'épaisseur de la gaine intermédiaire 24 est par exemple comprise entre 5 mm et 15 mm.

Dans la variante représentée sur la figure 8, la conduite flexible 10 comporte au moins une paire de couches d'armures externes 38, 40.

En variante, la conduite flexible 10 comporte plusieurs paires de couches d'armures externes 38, 40 superposées les unes sur les autres, par exemple deux paires de couches d'armures externes 38, 40.

Chaque paire comporte une première couche d'armures externes 38, appliquée sur la gaine intermédiaire 24 ou sur une autre paire de couches d'armures externes, et une deuxième couche d'armures externes 40, disposée autour de la première couche d'armures externes 38.

Chaque couche d'armures externes 38, 40 comporte au moins un élément d'armure 44 longitudinal enroulé à pas long autour de l'axe A-A' de la conduite 10.

Par « enroulé à pas long », on entend que la valeur absolue de l'angle d'hélice est inférieure à 60°, et est typiquement comprise entre 20° et 60°.

De préférence, dans l'exemple représenté sur la figure 1, la valeur absolue de l'angle d'hélice de chaque couche d'armures externes 38, 40 est supérieure à 45°, et est notamment comprise entre 50° et 60°, et est environ égale à 55°.

Les éléments d'armure 44 d'une première couche 38 sont enroulés généralement suivant un angle opposé par rapport aux éléments d'armure 44 d'une deuxième couche 40. Ainsi, si l'angle d'enroulement des éléments d'armure 44 de la première couche 38 est égal à + α, α étant compris entre 20° et 60°, l'angle d'enroulement des éléments d'armure 44 de la deuxième couche 40 disposée au contact de la première couche 38 est par exemple de - a, avec α compris entre 20° et 60°.

Les éléments d'armure 44 sont par exemple formés par des fils métalliques ou en matériau composite, ou par des rubans.

En variante, les couches d'armures externes 38, 40 sont remplacées par une voûte de pression formée à partir d'un fil profilé en métal présentant une géométrie en forme de T, de U, de K, de X ou de I.

Dans cet exemple, chaque couche d'armures 38, 40 repose sur au moins une bande anti-usure. La bande anti-usure est par exemple réalisée en plastique, notamment à base d'un polyamide ou d'un polyfluorure de vinylidène (PVDF). Elle présente une épaisseur inférieure à l'épaisseur de chaque gaine 20, 22, 24.

Avantageusement, un ruban de maintien telle qu'une bande en aramide à résistance mécanique élevée (Technora^{®} ou Kevlar^{®}) est enroulé autour de la deuxième couche d'armures externes 40 la plus à l'extérieur par rapport à l'axe A-A', pour assurer un maintien mécanique des couches d'armures externes 38, 40.

La gaine externe 22 est destinée à protéger l'espace annulaire 28 en empêchant la pénétration non contrôlée de fluide depuis l'extérieur de la conduite flexible 10 vers l'intérieur. Elle est avantageusement réalisée en matériau polymère, notamment à base d'une polyoléfine, tel que du polyéthylène ou du polypropylène, à base d'un polyamide, tel que du PA11 ou du PA12, ou à base d'un polymère fluoré tel que du polyfluorure de vinylidène (PVDF).

L'épaisseur de la gaine externe 22 est par exemple comprise entre 5 mm et 15 mm.

La gaine externe 22 est étanche. Elle empêche la pénétration de liquide depuis l'extérieur de la conduite 10 vers le volume intérieur 15. Selon l'invention, elle est apte à confiner le liquide introduit par l'orifice 29 à travers l'organe anti-retour 31 dans l'espace annulaire externe 28.

D'une manière connue, en référence à la figure 2, la conduite 10 est raccordée à l'ensemble de surface par l'embout 14. Chaque embout 14 comporte une voûte d'extrémité 50, et un capot 51 délimitant avec la voûte 50 une chambre 52 de réception des extrémités des éléments d'armure 44 et des couches formant la conduite, en particulier les gaines 20, 22, 24.

L'embout 14 comporte ainsi des éléments de sertissage (non représentés) de l'extrémité de chaque gaine 20, 22, 24. Les éléments de sertissage sont destinés respectivement à assurer l'étanchéité entre l'extérieur de la conduite 10 et l'espace annulaire externe 28 autour de la gaine externe 22, entre l'espace annulaire externe 28 et l'espace annulaire interne 26 autour de la gaine intermédiaire 24, et entre l'espace annulaire interne 26 et le passage central 16, autour de la gaine interne 20.

Dans cet exemple, la voûte d'extrémité 50 est destinée à raccorder la conduite 10 à un autre embout 14 ou à des équipements terminaux de fond et/ou de surface, avantageusement par l'intermédiaire d'une bride d'extrémité.

La voûte d'extrémité 50 présente un alésage central destiné à recevoir l'extrémité de la gaine de pression 20 et à permettre l'écoulement du fluide circulant à travers le passage central 16 vers l'extérieur de la conduite 10.

La conduite 10 comprend au moins un orifice 29, avantageusement une pluralité d'orifices 29 espacés angulairement autour de l'axe A-A'.

Le ou les orifices 29 s'étendent radialement à travers l'embout 14.

Dans cet exemple, chaque orifice 29 s'étend radialement à travers la voûte 50 de l'embout 14. Il débouche à l'extérieur de l'embout 14. L'orifice 29 est raccordé à l'espace annulaire externe 28 à l'intérieur de la gaine externe 22 par l'intermédiaire d'un canal de liaison 60.

Dans cet exemple, le canal de liaison 60 comporte un tronçon radial 62 raccordé à l'orifice 29 et un tronçon axial 64 débouchant dans l'espace annulaire externe 28.

L'orifice 29 présente un fond 66, à travers lequel débouche le canal 60. Le fond 66 reçoit en appui l'organe anti-retour 31.

L'organe anti-retour 31 est propre à empêcher en permanence le passage de fluide à travers l'orifice 29 dans le sens allant depuis le volume intérieur 15 vers l'extérieur.

Il est en outre apte à occuper une configuration de passage de fluide à travers l'orifice 29, dans le sens depuis l'extérieur de la conduite 10 vers le volume intérieur 15, lorsque la différence de pression entre l'extérieur de l'organe anti-retour 31 et le volume intérieur 15 est supérieure à une valeur seuil donnée.

L'organe anti-retour 31 est propre à passer spontanément dans une configuration d'empêchement du passage de fluide à travers l'orifice 29, lorsque la différence de pression entre l'extérieur de l'organe anti-retour 31 et le volume intérieur 15 est inférieure à la valeur seuil donnée.

Dans l'exemple représenté sur la figure 3, l'organe anti-retour 31 est formé par une valve anti retour.

Il comporte un corps de base 70 creux, monté dans l'orifice 29, un insert 72 fermant partiellement le corps de base creux 70, définissant avec le corps de base 70, un passage traversant 75 de circulation de liquide.

L'organe anti-retour 31 comporte une soupape d'obturation 74, montée mobile dans le passage de circulation 75 entre une position de fermeture du passage 75, visible sur la figure 3, et une position d'ouverture du passage 75, et un ressort taré 76 propre à solliciter en permanence la soupape 74 vers sa position de fermeture.

L'insert 72 définit un siège 78 faisant saillie dans le passage 75 pour l'appui étanche de la soupape 74 dans la position de fermeture.

Le siège 78 empêche le déplacement de la soupape 74 vers l'extérieur de la conduite 10.

Dans cet exemple, la soupape 74 est creuse. Elle présente une cavité intérieure 80 et des ouvertures traversantes 82 de passage de liquide débouchant dans la cavité intérieure 80.

Dans la position de fermeture, la soupape 74 s'appuie sur une surface intérieure du siège 78 et obture de manière étanche le passage 75. La soupape 74 est maintenue contre le siège 78 par le ressort 76 tant que la différence de pression entre l'extérieur de l'orifice 29 et le volume intérieur 15 est inférieure à la valeur seuil donnée.

L'organe anti-retour 31 est alors dans sa configuration d'empêchement du passage de fluide.

Lorsque la différence de pression entre l'extérieur de l'orifice 29 et le volume intérieur augmente au-dessus de la valeur seuil, la pression à l'extérieur de l'orifice 29 étant supérieure à celle du volume intérieur 15, la soupape 74 se déplace vers l'intérieur à l'encontre de la force engendrée par le ressort 76.

La soupape s'écarte du siège 78, autorisant le passage de liquide depuis l'extérieur vers le volume intérieur 15 à travers le passage 75 et la soupape 74.

L'organe anti-retour 31 est alors dans sa configuration de passage de fluide.

La valeur seuil dépend de la raideur du ressort 76. Cette valeur seuil est par exemple supérieure à 0,1 barg et est notamment comprise entre 0,2 barg et 10 barg. Dans cet exemple, la valeur seuil est comprise entre 3 barg et 6 barg.

Cette pression en barg est la pression interne ou relative avantageusement déterminée par l'équation Pgauge (barg) = Pabsolue (bara) - Patmosphérique (bar).

La valeur seuil est choisie pour être supérieure à la variation maximale de pression subie par la conduite 10 au niveau de l'orifice 29 lors des déplacements de la conduite 10 dans l'étendue d'eau, une fois la conduite 10 installée, lors du fonctionnement normal de l'installation d'exploitation de fluide.

Par exemple, lorsqu'une excursion maximale en service de 35 m en hauteur est prévue pour l'orifice 29, la valeur seuil peut être réglée à 4 barg ou à 5 barg en choisissant un ressort 76 de raideur appropriée.

Un procédé de mise en place de la conduite 10 selon l'invention va maintenant être décrit.

Initialement, la conduite 10 est fournie après sa fabrication, en maintenant chaque orifice 29 dégagé. L'espace annulaire externe 28 est alors avantageusement dépourvu de liquide. La pression dans l'espace annulaire externe 28 est égale à la pression atmosphérique extérieure.

Pour chaque orifice 29, un organe anti-retour 31 est fourni. Le bon fonctionnement de l'organe anti-retour 31 est testé par un protocole d'ouvertures et de fermetures successives de la soupape 74 à pression atmosphérique et éventuellement, dans des conditions simulant l'immersion en pleine mer.

Puis, l'organe anti-retour 31 est monté dans l'orifice 29. Ce montage peut s'effectuer dans l'usine de fabrication de la conduite 10, mais également plus tard, sur le navire de pose, par exemple lorsque l'embout 14 est accessible juste avant son immersion dans l'étendue d'eau.

Une fois l'organe anti-retour 31 monté, et avant immersion de l'embout 14, la pression s'appliquant à l'extérieur de la soupape 74 est sensiblement égale à la pression atmosphérique, de sorte que la différence de pression entre l'extérieur de l'organe anti-retour 31 et le volume intérieur 15 est inférieure à la valeur seuil.

L'organe anti-retour 31 se maintient au repos dans sa configuration d'empêchement de passage de fluide. Le passage de fluide depuis le volume intérieur 15 vers l'extérieur est empêché par la soupape 74 disposée en appui intérieur sur le siège 78.

Ensuite, la conduite 10 est immergée dans l'étendue d'eau. L'eau applique une pression croissante en fonction de la profondeur à l'extérieur de la soupape 74.

Lorsque la différence de pression entre la pression de l'eau à l'extérieur de l'orifice 19 et la pression qui règne dans le volume intérieur 15 augmente au-delà de la valeur seuil, la soupape 74 se déplace vers l'intérieur vers sa position d'ouverture, à l'encontre de la force engendrée par le ressort 76. L'organe anti-retour 31 passe alors dans sa configuration de passage de fluide.

De l'eau sous pression est alors entraînée dans l'orifice 29, à travers l'organe anti-retour 31, puis à travers le canal 60 jusqu'à l'espace annulaire externe 28.

Le volume intérieur 15 est donc au moins partiellement inondé par un liquide, ici par l'eau dans laquelle est plongée la conduite 10.

La différence de pression entre la pression de l'eau au niveau de l'orifice 29 et la pression qui règne dans le volume intérieur 15 diminue donc et passe en dessous de la valeur seuil.

Sous l'effet de la raideur du ressort 76, la soupape 74 se déplace vers sa position de fermeture, en appui sur le siège 78.

L'organe anti-retour 31 occupe alors de nouveau spontanément sa configuration d'empêchement du passage de fluide.

L'eau introduite dans le volume intérieur 15 est donc confinée de manière étanche dans ce volume intérieur 15, ici entre la gaine externe 22 et la gaine intermédiaire 24.

Une fois la conduite 10 mise en place, une tension importante peut s'appliquer sur les couches d'armure 34, 36. La présence de liquide dans l'espace annulaire externe 28 diminue considérablement la pression de contact des couches d'armure 34, 36 sur la gaine intermédiaire 24, et par suite atténue le phénomène de fluage de la gaine intermédiaire 24.

En réduisant le phénomène de fluage de la gaine intermédiaire 24 à l'intérieur des déjoints des éléments d'armure 44 formant la couche d'armures interne 34, on diminue la raideur en flexion de la conduite 10 et on améliore sa résistance à la fatigue dans le temps.

Par ailleurs, l'organe anti-retour 31 est conçu pour que la valeur seuil soit supérieure à la variation de pression maximale à l'extérieur de l'orifice 29 lors des déplacements de l'orifice 29. Une fois la conduite 10 mise en place, l'organe anti-retour 31 reste donc en permanence dans sa configuration d'empêchement du passage de fluide.

Le liquide présent dans l'espace annulaire externe 28 reste donc confiné et ne se renouvelle pas. L'oxygène présent dans ce liquide et/ou dans le gaz est rapidement consommé, tout comme les molécules de sulfure d'hydrogène en présence, compte tenu de la grande masse métallique des couches d'armures 34, 36, ce qui limite grandement le phénomène de corrosion de ces dernières.

La conduite 10 selon l'invention et son procédé de mise en place assurent donc une durée de vie adéquate pour la conduite 10, à moindre coût, puisqu'il n'est pas nécessaire d'augmenter considérablement l'épaisseur de la gaine intermédiaire 24, ni de prévoir des couches d'armures 34, 36 particulièrement résistantes à la corrosion.

Le procédé selon l'invention est mis en œuvre de manière simple, par la fourniture d'un organe anti-retour 31 taré de manière adéquate, pour autoriser une inondation unique de l'espace annulaire 28, et empêcher le renouvellement du liquide introduit dans l'espace annulaire 28.

L'organe anti-retour 31 est avantageusement disposé dans un orifice 29 déjà prévu dans l'embout 14, ce qui ne nécessite pas de modifier la conception de la conduite 10 ou/et de la requalifier.

Selon une variante de réalisation de la première ligne flexible, un organe anti-retour 31 n'est pas monté dans chacun des orifices 29 prévus dans la voûte 50 de l'embout 14.

En effet, un organe anti-retour 31 peut-être monté dans certains orifices 29 tandis que les autres orifices 29 peuvent être équipés d'un autre type d'organe anti-retour.

Cet autre type d'organe anti-retour est par exemple une soupape unidirectionnelle d'évacuation des gaz. Une telle soupape est propre à permettre en permanence le passage de gaz au travers des orifices 29 dans le sens allant du volume intérieur 15 vers l'extérieur dès lors que la différence de pression entre le volume intérieur 15 et l'extérieur est supérieure à une valeur seuil prédéfinie et pour laquelle la pression des gaz accumulés dans le volume intérieur devient trop importante.

Une deuxième conduite 10 selon l'invention, illustrée par la figure 5, diffère de la première conduite 10 en ce qu'elle comporte en outre un moyen de signalisation et/ou de traitement propre à être inondé par le liquide pénétrant dans l'orifice 29.

Le moyen de signalisation et/ou de traitement peut se présenter sous la forme d'une cartouche 90. La cartouche 90 étant adaptée pour contenir l'agent de signalisation et/ou l'agent de traitement.

La cartouche 90 est avantageusement disposée sur un chemin de passage du liquide entre l'orifice 29 et le volume intérieur 15, par exemple au fond 66 de l'orifice 29, sous l'organe anti-retour 31 ou/et dans le canal 60.

Lors de l'ouverture de l'organe anti-retour 31, le liquide passe à travers la cartouche 90 et convoie l'agent de signalisation et/ou de traitement jusqu'à l'espace annulaire externe 28.

L'agent de signalisation et/ou l'agent de traitement peut se présenter sous la forme d'un liquide ou sous la forme d'une poudre.

L'agent de signalisation est par exemple une encre contenant un colorant permettant de détecter visuellement la présence de fuite à travers la gaine externe 22. L'agent de traitement est avantageusement un liquide de protection comprenant par exemple un glycol, notamment le mono éthylène glycol, le liquide de protection comprenant avantageusement un alcool. De manière avantageuse, le liquide de protection peut contenir un inhibiteur de corrosion apte à piéger l'oxygène et/ou le sulfure d'hydrogène.

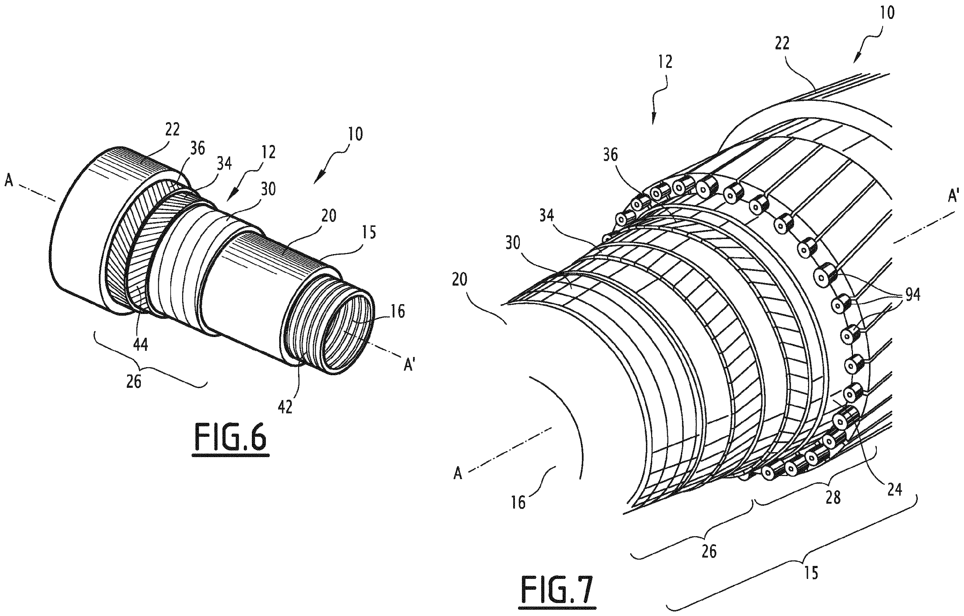

Une troisième conduite 10 selon l'invention est illustrée par la figure 6. À la différence de la conduite 10 illustrée sur la figure 1, cette conduite 10 est dépourvue de gaine intermédiaire 24. La troisième conduite 10 comporte donc un espace annulaire unique 26 défini entre la gaine de pression 20 et la gaine externe 22.

Les couches d'armures de traction 34, 36 internes appuient radialement sur la gaine de pression 20.

Chaque orifice 29 est raccordé à l'espace annulaire 26 par l'intermédiaire du canal 60 pour permettre l'inondation au moins partielle de l'espace annulaire 26 lors de l'immersion de la conduite 10, sans renouvellement du liquide introduit dans l'espace annulaire 26, comme décrit précédemment.

Le procédé de mise en place de la troisième conduite 10 est par ailleurs analogue à celui de la première conduite 10.

Une quatrième conduite 10 selon l'invention est illustrée par la figure 7. À la différence de la conduite 10 illustrée sur la figure 1, cette conduite 10 comporte des câbles 94 de transport d'une puissance électrique, propres à émettre de la chaleur. Les câbles 94 sont disposés dans un espace annulaire externe 28, à l'extérieur d'une gaine intermédiaire 24. Ce type de conduite est une ligne de production intégrée multifonctions (ou IPB pour « Integrated Production Bundle » en langue anglaise).

L'orifice 29 est raccordé à l'espace annulaire externe 28 contenant les câbles 94, pour permettre l'inondation au moins partielle de cet espace annulaire 28 lors de l'introduction de la conduite 10 dans l'étendue d'eau, sans renouvellement du liquide introduit dans l'espace annulaire 28.

La présence de liquide dans l'espace annulaire 28 favorise l'évacuation de la chaleur vers le cœur de la conduite flexible 10.

Le procédé de mise en place de cette conduite 10 est par ailleurs analogue à celui de la conduite 10 visible sur la figure 1.

Dans une variante, l'inondation au moins partielle du volume intérieur 15 de la conduite 10 est effectuée avant l'immersion de la conduite 10 dans l'étendue d'eau, par exemple dans le navire de pose.

La conduite 10 est alors remplie avec un liquide sous pression pour ouvrir temporairement le ou les organes anti-retour 31 et permettre ainsi l'inondation au moins partielle du volume intérieur 15.

Dans cette variante, le liquide introduit dans la conduite 10 peut être différent de l'eau présente dans l'étendue d'eau. Ce liquide est par exemple une eau désaérée, un glycol ou un autre liquide avec des additifs, tel que décrit plus haut.

Dans une variante, non représentée, l'organe anti-retour 31 est remplacé par une vanne manœuvrable manuellement ou bien télécommandée ou encore une vanne manœuvrable à l'aide un véhicule télécommandé entre la configuration de passage de fluide à travers l'orifice 29, depuis l'extérieur vers l'espace annulaire 26, et une configuration d'empêchement du passage de fluide à travers l'orifice 29.

Lors de l'étape d'inondation, la vanne est initialement placée dans la configuration de passage de fluide. Comme décrit précédemment, ceci permet l'inondation au moins partielle de l'espace annulaire 26 par le liquide présent à l'extérieur de la conduite 10.

Ceci étant fait, la vanne est manœuvrée manuellement, par exemple par un plongeur, ou bien télécommandée via l'envoi d'un signal acoustique. En variante, la vanne est manœuvrée par un véhicule télécommandé (« Remotely Operated Vehicle » ou « ROV) pour la passer dans la configuration d'empêchement du passage de fluide et confiner ainsi le liquide présent dans l'espace annulaire 26, en empêchant la pénétration de fluide supplémentaire dans cet espace 26. Comme précédemment, un agent de traitement et/ou de protection peut être introduit dans l'espace annulaire 26 lors de son inondation.

De même, l'espace annulaire 26 peut être rempli lors de la descente de la conduite 10 dans l'étendue d'eau, ou en variante, avant son introduction dans l'étendue d'eau, à terre ou sur le navire de pose.

Par exemple, on pré-remplit en quasi-totalité l'espace annulaire 26 de la conduite 10 avant son immersion avec un fluide désaéré présentant une très faible concentration en oxygène. Le fluide est par exemple une eau croupie, une eau de mer désaérée, un lubrifiant de type « fluide magique » (« magic fluid » en anglais) obtenu par le mélange d'un glycol tel que le MonoEthylène Glycol (MEG) avec un alcool tel que le méthanol, le mélange pouvant contenir d'autres additifs tels qu'un inhibiteur de corrosion.

Ainsi, lorsque la conduite 10 est immergée et que celle-ci atteint la profondeur à partir de laquelle la valeur seuil de l'organe anti-retour 31 déclenche son ouverture, une faible quantité d'eau de mer est introduite dans l'espace annulaire 26, ce qui permet de compléter le faible volume non rempli durant l'étape de pré-remplissage.

La quantité d'eau de mer introduite dans l'espace annulaire 26 de la conduite 10 lors de son immersion est très faible comparée à la quantité du fluide introduit durant l'étape de pré-remplissage, par exemple inférieure à 10 % en volume.

De la sorte, on limite grandement le phénomène de corrosion des couches d'armures 34, 36. De plus, on diminue également la pression de contact radial engendrée par les couches d'armures 34, 36 sur la gaine de pression 20.

## Revendications

1. - Procédé de mise en place d'une ligne flexible comportant une gaine externe (22) délimitant un volume intérieur (15), une gaine imperméable (20; 24) disposée dans le volume intérieur (15) à la gaine externe (22), au moins un orifice (29) étant raccordé de manière fluidique à un espace annulaire (26; 28) défini entre la gaine imperméable (20; 24) et la gaine externe (22) ; comportant les étapes suivantes :
- introduction de la ligne flexible dans un liquide ;
- inondation au moins partielle de l'espace annulaire (26 ; 28) situé entre la gaine imperméable (20; 24) et la gaine externe (22), sans inonder le volume situé à l'intérieur de la gaine imperméable (20; 24) par le liquide à travers l'au moins un orifice (29) ménagé dans la ligne flexible ; la ligne flexible comportant au moins un élément allongé d'armure (44), et/ou un élément allongé (94) de transport de puissance électrique et/ou d'information disposé dans l'espace annulaire (26; 28) entre la gaine imperméable (20; 24) et la gaine externe (22)
**caractérisé en ce que** le procédé comprend une étape de fermeture du ou de chaque orifice (29) après l'étape d'inondation.

2. - Procédé selon la revendication 1, dans lequel la ligne flexible comporte un organe anti-retour (31) disposé dans l'orifice (29), empêchant le passage de fluide depuis le volume intérieur (15) vers l'extérieur, l'organe anti-retour (31) prenant une configuration de passage de fluide à travers l'orifice (29), depuis l'extérieur vers le volume intérieur (15), lorsque la différence de pression entre le liquide situé à l'extérieur de l'organe anti-retour (31) et le volume intérieur (15) est supérieure à une valeur seuil donnée non nulle lors de l'étape d'inondation, l'organe anti-retour (31) passant spontanément dans une configuration d'empêchement du passage de fluide à travers l'orifice (29) lorsque la différence de pression entre le liquide situé à l'extérieur de l'organe anti-retour (31) et le volume intérieur (15) est inférieure à la valeur seuil donnée, après l'étape d'inondation.

3. - Procédé selon la revendication 2, dans lequel, après l'étape de fermeture, l'organe anti-retour (31) reste dans sa configuration fermée lors des variations de profondeur de l'orifice (29) dans le liquide.

4. - Procédé selon l'une quelconque des revendications 2 ou 3, dans lequel la valeur seuil est supérieure à 0,1 barg et est notamment comprise entre 0,2 barg et 10 barg.

5. - Procédé selon la revendication 1, dans lequel la ligne comporte une vanne manœuvrable manuellement, une vanne télécommandée par envoi d'un signal acoustique ou un vanne manœuvrable par un véhicule télécommandé entre une configuration de passage de fluide à travers l'orifice (29), depuis l'extérieur vers le volume intérieur (15), et une configuration d'empêchement du passage de fluide à travers l'orifice (29), la vanne étant dans la configuration de passage de fluide lors de l'étape d'inondation, le procédé comprenant une étape de manœuvre de la vanne vers la configuration d'empêchement du passage de fluide après l'étape d'inondation.

6. - Procédé selon l'une quelconque des revendications précédentes, dans lequel le liquide est une étendue d'eau dans laquelle est installée la ligne flexible, l'étape d'inondation comprenant l'introduction d'eau de l'étendue d'eau dans le volume intérieur (15).

## Patentansprüche

1. Verfahren zum Anbringen einer flexiblen Leitung, umfassend einen äußeren Mantel (22), der ein inneres Volumen (15) begrenzt, einen undurchlässigen Mantel (20; 24), der in dem inneren Volumen (15) an dem äußeren Mantel (22) angeordnet ist, wobei mindestens eine Öffnung (29) fluidisch mit einem Ringraum (26; 28) verbunden ist, der zwischen dem undurchlässigen Mantel (20; 24) und dem äußeren Mantel (22) definiert ist; umfassend die folgenden Schritte:
- Einleiten einer Flüssigkeit in die flexible Leitung;
- zumindest teilweises Fluten des Ringraums (26; 28) zwischen dem undurchlässigen Mantel (20; 24) und dem äußeren Mantel (22), ohne das Volumen, das sich im Innern des undurchlässigen Mantels (20; 24) befindet, durch die mindestens eine Öffnung (29), die in der flexiblen Leitung angeordnet ist, mit der Flüssigkeit zu fluten;
die flexible Leitung umfassend mindestens ein längliches Verstärkungselement (44) und/oder ein längliches Element (94) zum Transport von elektrischer Leistung und/oder Informationen, das in dem Ringraum (26; 28) zwischen dem undurchlässigen Mantel (20; 24) und dem äußeren Mantel (22) angeordnet ist
**dadurch gekennzeichnet, dass** das Verfahren einen Schritt eines Schließens der oder jeder Öffnung (29) nach dem Schritt eines Flutens umfasst.

2. Verfahren nach Anspruch 1, wobei die flexible Leitung ein Rückschlagorgan (31) aufweist, das in der Öffnung (29) angeordnet ist und den Durchgang von Flüssigkeit aus dem inneren Volumen (15) nach außen verhindert, wobei das Rückschlagorgan (31) eine Konfiguration für den Durchgang von Flüssigkeit durch die Öffnung (29) von außen in das innere Volumen (15) annimmt, wenn die Druckdifferenz zwischen der Flüssigkeit außerhalb des Rückschlagorgans (31) und dem inneren Volumen (15) größer ist als ein gegebener Schwellenwert, der während des Schritts eines Flutens nicht Null ist, wobei das Rückschlagorgan (31) spontan in eine Konfiguration übergeht, die den Durchgang von Fluid durch die Öffnung (29) verhindert, wenn die Druckdifferenz zwischen der Flüssigkeit außerhalb des Rückschlagorgans (31) und dem inneren Volumen (15) nach dem Schritt eines Flutens kleiner ist als der gegebene Schwellenwert.

3. Verfahren nach Anspruch 2, wobei nach dem Schritt eines Schließens das Rückschlagorgan (31) bei Änderungen der Tiefe der Öffnung (29) in der Flüssigkeit in seiner geschlossenen Konfiguration bleibt.

4. Verfahren nach einem der Ansprüche 2 oder 3, wobei der Schwellenwert größer ist als 0,1 bar (g) ist und insbesondere zwischen 0,2 bar (g) und 10 bar (g) liegt.

5. Verfahren nach Anspruch 1, wobei die Leitung ein manuell bedienbares Ventil, ein durch Senden eines akustischen Signals ferngesteuertes Ventil oder ein von einem ferngesteuerten Fahrzeug bedienbares Ventil zwischen einer Konfiguration für einen Durchgang von Fluid durch die Öffnung (29) von außen in das innere Volumen (15), und einer Konfiguration zum Verhindern eines Durchgangs von Fluid durch die Öffnung (29) umfasst, wobei das Ventil während des Schritts eines Flutens in der Fluiddurchgangskonfiguration ist, das Verfahren umfassend einen Schritt eines Bedienens des Ventils in die Konfiguration zum Verhindern des Durchgangs von Fluid nach dem Schritt eines Flutens.

6. Verfahren nach einem der vorherigen Ansprüche, wobei die Flüssigkeit ein Wasserkörper ist, in dem die flexible Leitung installiert ist, der Schritt eines Flutens umfassend das Einleiten von Wasser aus dem Wasserkörper in das innere Volumen (15).

## Claims

1. A method of installing a flexible line comprising an outer sheath (22) defining an interior volume (15), an impermeable sheath (20; 24) disposed in the interior volume (15) to the outer sheath (22), at least one orifice (29) being fluidly connected to an annular space (26; 28) defined between the impermeable sheath (20; 24) and the outer sheath (22); comprising the steps of:
- introducing the flexible line into a liquid;
- flooding at least part of the annular space (26; 28) between the impermeable sheath (20; 24) and the outer sheath (22), without flooding the volume inside the impermeable sheath (20; 24) with the liquid through the at least one orifice (29) in the flexible line;
the flexible line comprising at least one elongate armour element (44), and/or an elongate electrical power and/or information-carrying element (94) disposed in the annular space (26; 28) between the impermeable sheath (20; 24) and the outer sheath (22)
**characterised in that** the method includes a step of closing the or each orifice (29) after the flooding step.

2. The method according to claim 1, wherein the flexible line comprises a non-return member (31) disposed in the orifice (29), preventing the passage of fluid from the interior volume (15) to the exterior, the non-return member (31) assuming a configuration allowing the passage of fluid through the orifice (29) from the exterior to the interior volume (15), when the pressure differential between the liquid outside the non-return member (31) and the inner volume (15) is greater than a given non-zero threshold value during the flooding step, the non-return member (31) spontaneously changing to a configuration of preventing the passage of fluid through the orifice (29) when the pressure differential between the liquid outside the non-return member (31) and the inner volume (15) is less than the given threshold value, after the flooding step.

3. The method according to claim 2, wherein after the closing step, the non-return member (31) remains in its closed configuration during variations in the depth of the orifice (29) in the liquid.

4. The method according to any one of claims 2 or 3, wherein the threshold value is greater than 0.1 barg and is in particular between 0.2 barg and 10 barg.

5. The method according to claim 1, wherein the line comprises a manually operable valve, a valve remotely controlled by sending an acoustic signal or a valve operable by a remotely controlled vehicle between a configuration of allowing fluid to pass through the orifice (29) from the exterior to the interior volume (15), and a configuration of preventing fluid from passing through the orifice (29), the valve being in the configuration allowing fluid passage during the flooding step, the method comprising a step of manoeuvring the valve to the configuration preventing fluid passage after the flooding step.

6. The method according to any of the preceding claims, wherein the liquid is a body of water in which the flexible line is installed, the flooding step comprising introducing water from the body of water into the interior volume (15).
